(19)

Europäisches
Patentamt
European
Patent Office
Office européen
des brevets

(11) **EP 4 349 475 A1**

(12) **EUROPEAN PATENT APPLICATION**

(43) Date of publication:
**10.04.2024   Bulletin 2024/15**

(21) Application number: **22382951.6**

(22) Date of filing: **07.10.2022**

(51) International Patent Classification (IPC):
**B01J 20/12** (2006.01)    **B01J 20/34** (2006.01)
**B01D 11/02** (2006.01)    **C11B 13/04** (2006.01)

(52) Cooperative Patent Classification (CPC):
**B01J 20/12; B01D 11/0203; B01D 11/0219;
B01D 11/0288; B01D 11/0292; B01J 20/3433;
B01J 20/3458; B01J 20/3475; B01J 20/3491;
C11B 13/04;** B01D 11/0265; C11C 3/00;
C11C 3/003

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Clariant International Ltd
4132 Muttenz (CH)**

(72) Inventors:
  • **HARTMANN, Timo
    85221 Dachau (DE)**
  • **CELINSKI, Vinicius Ribeiro
    80686 Munich (DE)**

  • **RAMIREZ GARCIA, Paula
    84034 Landshut (DE)**
  • **WERMER, Andreas
    85435 Erding (DE)**
  • **RODRIGUEZ GAYA, Carlos
    45210 Yuncos (ES)**
  • **HERRERO HERNÁNDEZ, Jorge
    45210 Yuncos (ES)**
  • **NAVAS ROJO, David
    43382 Maspujols (ES)**

(74) Representative: **Clariant Produkte (Deutschland)
GmbH
Patent Management
Industriepark Höchst, G 860
65926 Frankfurt am Main (DE)**

(54) **METHOD FOR RECOVERING SPENT BLEACHING EARTH**

(57)    The present invention concerns a method for regenerating a spent adsorbent, as well as the use of the regenerated adsorbent as an adsorbent, *i.a.,* in circular oil or renewable oil applications.

EP 4 349 475 A1

**Description**

The present invention concerns a method for recovering spent adsorbent as well as the use of the recovered material as an adsorbent, *i.a.,* in renewable oil and plastics recycling applications.

Oil refining implies multiple physical and chemical processes to remove oil impurities such as color bodies, oxidation agents or contaminants like metals, halogen containing molecules or phosphorous compounds that make it not suitable for its commercialization or use in other applications. In order to remove these compounds, adsorbents are used in the so-called bleaching process, where impurities and/or contaminants are bound on the adsorbent's high surface. After bleaching, the adsorbent (typically in the form of bleaching earth)-oil mixture is separated by filtration using filters resulting in a bleached oil ready for downstream processes such as deodorization in edible oil refining or hydrogenation in case of renewable fuel applications, and a spent adsorbent (typically a spent bleaching earth (SBE) plus potentially also filter aids which can have a positive effect on the overall performance) saturated with oil that is considered a waste that typically ends up in landfill.

The large volume of spent adsorbent (in particular spent bleaching earth) generated in the edible oil and renewable fuels industries is one of the main challenges refineries face in terms of costs, safety, and sustainability, since the self-ignition nature of the spent bleaching earths limits the number of its applications and requires special conditions for their disposal.

Triggered by new legislations that are looking to promote the use of waste feedstocks, e.g., in renewable diesel production, the oil refining industry is shifting the way spent adsorbent (eg. spent bleaching earth) is handled, considering the remaining oil as a valuable resource that can be recovered and improve the sustainability in their operations.

In order to recover the oil in spent adsorbent (mainly spent bleaching earth), oil refineries and waste managers can extract the oil to recover part of the valuable oil but still are ending up with another residue (at least 2/3 in mass) typically referred to as de-oiled adsorbent (e.g. de-oiled bleaching earth (DOBE)) which is so far considered to be waste, that similarly to spent bleaching earth predominantly ends in landfills, or in rare cases is combusted or used in bio-gas or cement production - all this limiting the economic feasibility of oil extraction with a reduced environmental impact.

In renewable fuel applications, bleaching earth is still considered to be a single use product resulting in problems like high amount of waste, high demand for fresh bleaching earth and loss of retained oil and the resulting cost. Extraction or de-oiling of spent bleaching earth (SBE) can be used to recover the oil - a regeneration of the bleaching earth (BE) material for reuse in feedstock refining processes was not considered at large commercial scale so far, mainly since the efforts and cost of regeneration of BE were considered to be too high compared to the cost of fresh bleaching earth. Also, re-use of regenerated BE (reBE) in edible oil applications is facing severe regulatory hurdles and is not attractive from this perspective as well.

De-oiling methods removing major parts of the oil adsorbed onto bleaching earth after its use are widely known in the art and include multiple steps that mainly differ by the extraction conditions, in particular the solvent, used. Hexane is the most common extraction solvent (cf. e.g. US6780321B2), but other extraction solvents like strong acids (cf. e.g. A. Boukerroui, M. Ouali, Chemical Technology and Biotechnology, V. 75, Issue 9 (2000), 773-776), sub-critical water (cf. e.g. R. A. Fattah, N. A. Mostafa, M. S. Mahmoud, W. Abdelmoez, Proceeding of the 7th ICEE Conference 27-29 (2014)), supercritical carbon dioxide (cf. e.g. W. A. Oladosua, Z. A. Manan, S. R. W. Alwi, Chemical Engineering Transactions, 56 (2017), 133-138) and methanol (cf. e.g. J. Naser, O. P. Avbenake, F. N. Dabai, B. Y. Jibril, Waste Management, 126 (2021), 258-265) are known in the art.

The use of compressed fluids to de-oil SBE has been investigated and reported, with a strong focus on the oil quality and quantity to be recovered. In particular, the utilization of carbon dioxide is an environmentally acceptable solution since $CO_2$ is non-flammable and nontoxic, is a suitable solvent for lipids and leaves the treated matrix free of solvent residue.

- Waldmann and Eggers, JAOCS, 68 (1991), pp. 922-930 investigated the de-oiling of palm and rapeseed SBE by supercritical $CO_2$ (sc$CO_2$) at 50 and 80 °C and 35-75 MPa. An increase of pressure was found to accelerate the extraction course, whereas temperature had a more complex trend with a faster extraction at 50 °C than at 80 °C at 35 MPa and the opposite at 50 MPa. Whatever the operating conditions, the bleaching clays were de-oiled to approximately the same degree (> 90%) with qualities of recovered oils that did not vary notably in terms of the free fatty acid contents, peroxide and anisidine indices and color.
- A high pressure / high temperature combination (75.8 MPa/80 °C) was also used to treat neutral and acid clays coming from soybean oil refining with $CO_2$, as reported by King et al., J. Supercrit. Fluids, 5 (1992), pp. 38-41. Sc$CO_2$ extraction was found to be equally applicable to both neutral and acidic matrices and the extraction degrees approached 100% provided clays were mixed with a pelletized dispersant.
- Focusing on the oil quality, Kheang et al., Am. J. Appl. Sci., 3 (2006), pp. 2063-2067 compared the characteristics of oils extracted by sc$CO_2$ (conditions not given) or by hexane from a SBE coming from palm oil refining. Lower phosphorus content and peroxide value and light yellow color gave a superior quality to the $CO_2$-recovered oil

compared to the dark hexane-recovered oils.

- More recently, the use of sub-critical water was investigated to de-oil SBE by R. Fattah et al., Adv. Biosci. Biotechnol., 5 (2014), pp. 261-272. "Sub-critical water" means the treatment was carried out at 180-280 °C. The optimum conditions were found to be 270 °C for 20 min with a feed-to-solvent ratio of 1:3 to attain the maximum extraction yield of 98.4%. The recovered oils were not characterized, except for one sample that was found to contain almost 87% of free fatty acids.

KR102350370B1 describes a method of regenerating spent acid clay from edible oil refining by a supercritical extraction process using supercritical $CO_2$ (i.e., at a temperature higher than 31 °C and a pressure higher than 7.380 MPa) or supercritical water (i.e., at a temperature higher than 374 °C and a pressure higher than 22.060 MPa), in both cases along with an auxiliary solvent such as ethanol. The method allows to recover more than 98% of the residual oil from the spent acid clay. The recovered oil can be dewaxed and deodorized to obtain refined oil. The waste acid clay from which the oil is separated in the supercritical extraction process has the same quality as the original acid clay in terms of bulk density, moisture content, particle size, and filtration time, allowing the waste acid clay to be reused.

P. Subra-Paternault et al., J. Supercritical Fluids, 149 (2019) pp. 42-53, report on compressed fluids that were used in a two-step scheme to extract oil from rapeseed oil and sunflower oil refining spent bleaching earths (SBE). The first extraction, performed with supercritical $CO_2$ (at a temperature of 45 °C and a pressure of 23 MPa), yielded SBE matrices depleted in neutral lipids (final contents of 1% and 3.5% compared to initial 22% and 28%, respectively) and of better flowing characteristics thanks to the downsizing of particle (83% of particles had sizes below 50 $\mu$m). The second step was assisted by ethanol used either as a compressed liquid, as a co-solvent or as a $CO_2$-expanded mixture by changing temperature (35° or 60 °C) pressure (6 or 18 MPa) and ethanol percentage (10-100 wt%). A statistical analysis concluded that extraction yield and oligomers percentage were dependent on pressure, ethanol percentage and their interaction, whilst temperature was a significant factor only for yield. The pigments content of oils produced by $CO_2$ and extracts produced by pressurized ethanol was below 5 $\mu$g/g oil and 32 mg/g extract.

Low et al., Cleaner Energy and Technology, 7 (2022) 100418 suggests that to utilize the energy in SBE the residual oil could be extracted for use as a fuel (in boilers, furnaces or generators) or for converting to biodiesel. The oil-free SBE could potentially be regenerated and recycled back into the edible oil bleaching process. While among the several options for extracting the residual oil from SBE using pressurized carbon dioxide or treating with pressurized hot water are mentioned, solvent extraction with acetone yielded the best results in terms of removing residual oil from SBE Once the residual oil has been extracted, the SBE can be regenerated using various methods such as acid treatment while heating and calcination at high temperature, leading to regenerated bleaching earth with bleaching efficiencies of between 90-100% when compared to pristine bleaching earth. The comparably high energy consumption for heating and the use of additional chemicals are drawbacks of this approach.

While the de-oiling or oil extraction from spent bleaching earth from edible oil refining has been described in the prior art, mainly with a focus on oil recovery but also including proposals for the re-use of the resulting de-oiled bleaching earth, so far there appears to be a lack of interest in regenerating adsorbents (such as bleaching earth) used with different, more difficult to refine feedstocks, and in particular waste feedstocks, with the aim of re-using the spent and regenerated absorbent.

Accordingly, there is a need for a method for regenerating adsorbents that have been used in removing impurities from hard-to-treat feedstocks.

It is an objective of the present invention to provide a new method for regenerating spent adsorbent material so that the shortcomings of the prior art approaches are overcome. Although the examples described with respect to the present invention refer to waste oils like used cooking oil and animal fat, the method of the invention can be equally used in other oilbased feedstocks including all types of edible oils, waste oils, technical oils and pyrolysis oils.

In particular, the present invention solves the problems of disposing spent and/or de-oiled adsorbent, in particular de-oiled bleaching earth, into landfill or secondary waste uses, offering a more sustainable circular approach, where de-oiled adsorbent obtained by the method of the invention can be used for feedstock refining. It also improves raw clay mine lifetime, operating costs, and environmental footprint by reducing the amount of fresh (also called: virgin) bleaching earth necessary to produce a finished product, such as prior art adsorbent compositions.

This and other objectives of the invention are solved by the subject matter of the independent claims. Further and preferred embodiments of the invention are the subject matter of the dependent claims.

A first object of the invention is a method for regenerating spent adsorbent, in particular spent bleaching earth (SBE). The method of the invention comprises providing the spent adsorbent from the treatment of a waste feedstock, extracting residual feedstock from the spent adsorbent with supercritical carbon dioxide ($scCO_2$) and/or sub-critical water (sub-$cH_2O$), thereby removing impurities from the spent absorbent to obtain a regenerated adsorbent, and separating the regenerated adsorbent from the $scCO_2$ and/or sub-$cH_2O$.

SBE is just one particular, preferred form of spent adsorbent, i.e., SBE can be part of such spent adsorbent, which may contain other components like silica, diatomaceous earth, perlite, cellulose etc.

The method of the invention preferably leads to a regenerated adsorbent that has a phosphorous removal activity of at least 60 % compared to the phosphorous removal activity of the virgin adsorbent. Preferably, the phosphorous removal activity is higher than 80 %, even more preferably higher than 90 % compared to the phosphorous removal activity of the virgin adsorbent.

The method of the invention preferably leads to a regenerated adsorbent that has a residual oil content of 15 % (w/w) or less, more preferably less than 5 % (w/w).

Extracting residual feedstock from the spent adsorbent in one embodiment is done using supercritical $CO_2$, i.e., at a temperature higher than 31 °C and a pressure higher than 7.380 MPa (or in other words above the triple point of $CO_2$). It has turned out, that good results are obtained if the extraction is done at temperatures between 40 and 100 °C, preferably at or about 60 °C. Likewise, the extraction is preferably done at pressures between 100 and 500 bar, preferably at or about 300 bar. The extraction typically is carried out for 1 to 12 h, ideally for approximately 6 h. A preferred extraction using $scCO_2$ is carried out at 60 °C and 300 bar for no less than 6 h.

Extracting residual feedstock from the spent adsorbent in one further embodiment is done using subcritical water, i.e., liquid water under pressure at temperatures between 100 °C and the critical temperature of 374 °C. It has turned out, that good results are obtained if the extraction is done at temperatures between 150 and 200 °C. Likewise, the extraction is preferably done at pressures between 5 and 15 bar. The extraction typically is carried out for 2 hours or less.

In a preferred embodiment, extracting residual feedstock from the spent adsorbent is done using a combination of supercritical $CO_2$ extraction followed by subcritical water extraction, both at the above given typical and preferred temperature, pressure and time ranges.

In a still further preferred embodiment, the method of the invention can be used to recover the waste feedstock, which in turn can be further processed or used (e.g., for biodiesel production, renewable diesel production, for bio-polymer production etc.).

The method of the present invention addresses the problem of removing contaminants such as in particular phosphorus (P) and silicon (Si) (but also as the case may be other contaminants like magnesium, iron, calcium, aluminum and sodium) from spent adsorbent, preferably form spent bleaching earth that had been used to treat "hard-to-treat" waste feedstocks. Such feedstocks are of special interest for the production of hydrotreated vegetable oil (HVO) and/or sustainable aviation fuels (SAF) and/or fatty acid methyl esters (FAME) production for biodiesel.

Waste feedstocks (such as used cooking oils) and edible oils share some common properties but also show significant differences which influence the way these feedstocks are processed. Oils for edible oil applications are usually farmed and processed in a single crop production and are cared for very well, to ensure the highest oil quality and resulting resell price. Impurities of concern remaining in edible oils usually are on a very low level such as pigments, odorants, in some cases metals or impurities originating from production. During the purification process of edible oils the adsorbent, preferably the bleaching earth, can remove some of those impurities directly or enable the removal in downstream processes such as deodorization.

Waste feedstocks (such as used cooking oils and animal fats) can come from a single source, e.g. beef tallow, but are more frequently mixed from different sources for production reasons. Waste feedstocks like used cooking oils are usually collected from various, sometimes very small sources, blended, and then used as one feedstock for downstream uses. The difference in the composition of those feedstocks is significant, as the prior way of use (e.g. frying), additives during the use (e.g. food, salt, defoaming agents), storage times and overall blend can change on a daily basis. As a result, the range of expected impurities is wide (e.g. free fatty acids (FFA), water, metals, silicon, phosphorous, halogens, nitrogenates, oxygenates & oxygenation productions, bio degradation products, polymers, decomposition products , isomerization products, and hydrolysis products, peroxides, and many more) and most commonly the exact composition is not known. Especially the presence of degradation products, polymers, and decomposition products marks the difference between edible oil and waste feedstocks.

Especially hard to treat waste feedstocks with very high levels of impurities require intensive processes such as hydrogenation for the production of valuable products such as e.g. 2nd generation renewable fuels (impurity conversion and hydrodeoxygenation (HDO)). A strong need for purification of those feedstocks exists, as hydrogenation catalysts can be affected badly by many impurities present in those feedstocks. Adsorbents used in purification are commonly used to reduce Si and/or P containing compounds along with halogens, metals and residual polymers or gum like compounds to protect the downstream catalysts, avoid fouling and corrosion. The chemical nature of those impurities removed by the adsorbent, preferably bleaching earth, is different in such waste feedstocks compared to e.g. organic pigments in edible oils and therefore different adsorbent mechanisms can come into play. The share of waste feedstocks in the final oil blend to be processed at the refinery will determine the load of these mentioned impurities on the spent adsorbent, resulting in differences for adsorbent regeneration.

Examples of waste feedstocks (sometimes also referred to as hard-to-treat or difficult-to-refine feedstocks) are feedstocks such as those described and defined in Annex IX of the EU Renewable Energy Directive (RED II) [https://www.europex.org/eulegislation/renewable-energy-energy-directive/]:

- Algae if cultivated on land in ponds or photobioreactors
- Biomass fraction of mixed municipal waste
- Biowaste from private households
- Biomass fraction of industrial waste, including material from retail and wholesale and the agro-food and fish and aquaculture industry
- Straw
- Animal manure and sewage sludge;
- Palm oil mill effluent and empty palm fruit bunches;
- Tall oil pitch;
- Crude glycerine;
- Bagasse;
- Grape marcs and wine lees;
- Nut shells;
- Husks;
- Cobs cleaned of kernels of corn;
- Biomass fraction of wastes and residues from forestry and forest-based industries, including, bark, branches, pre-commercial thinnings, leaves, needles, tree tops, saw dust, cutter shavings, black liquor, brown liquor, fibre sludge, lignin and tall oil;
- Other non-food cellulosic material;
- Other ligno-cellulosic material
- Used cooking oil;
- Animal fats

Further examples of waste feedstocks are distillers corn oil, brown grease, soap stock, circular feedstocks, extracted oil from spent bleaching earth, palm fatty acid distillate, feedstocks for non-food or non-feed applications such as mineral oil treatment, plastic recycling or bioplastic production, including technical oil and pyrolysis oil applications, e. g in connection with bioplastics or chemical recycling from used cooking oil, feedstocks from pyrolysis of plastics, biomass, tires etc.

The waste feedstock according to the invention can also be a two or multi-component mixture of different individual feedstock species. While one component is a waste feedstock, the other component(s) of such feedstock mixtures can also be waste feedstock(s) and/or more easy to treat feedstocks such as vegetable oil etc.

Typical waste feedstocks suitable for the present invention contain at least 10 % (w/w) of used cooking oil (UCO), wastes from edible oil production and/or animal fat (AF) and can comprise significantly higher amounts of gums, phosphorous compounds and unknown compounds interfering with adsorption compared to (edible) vegetable oils.

For example, waste feedstocks can contain organophosphorus compounds (e.g. phosphonates), but also other phosphorus species that are different in nature from the commonly found phospholipids in edible oils. The same is true for impurities containing silicon. Defoaming agents based on silicon are applied during deep frying and can be found in UCO but are highly unlikely to be found during edible oil refinement. The fact that polarity and molecular sizes can be different affects the adsorption/desorption processes both during impurity removal from oils as well as during extraction from the spent adsorbent. This type of relationship between molecular and adsorbent characteristics is known to a person skilled in the art. Up to 90 % of the waste feedstock can be vegetable oil etc.

Regeneration methods relying on conventional extraction techniques such as solvent extraction and thermal treatment, that have been developed for regenerating SBEs from vegetable oil refining, perform less well with SBE or other spent adsorbents obtained after refining such waste feedstocks. The method of the invention allows the regeneration of spent adsorbents, preferably SBE, that has been used on waste feedstocks so that the resulting regenerated adsorbent, preferably regenerated bleaching earth (reBE) has similar capacity for contaminant removal as the original adsorbent, preferably the virgin BE. This contaminant removal capacity can be different for different contaminants and different feedstocks. For the contaminant phosphorus (P) it is at least 60 % compared to the P removal capacity of the virgin/fresh adsorbent (preferably BE) when used with waste feedstocks containing at least 20% UCO or AF.

In a preferred embodiment, the method of the present invention to regenerate spent adsorbent material comprises extracting the adsorbent with $scCO_2$ and/or sub-critical water, refeeding, and separation of filter aids. Supercritical $CO_2$ extraction typically requires a reactor unit holding the material (in this case: the spent adsorbent material) to be extracted. The material can be added in batches and removed after the extraction, or the reactor can be operated continuously so that there is stream of spent adsorbent material entering the extraction reactor and a stream of extracted material leaving the extraction reactor. For successful extraction at supercritical conditions the supplied $CO_2$ stream is heated and pressurized above the triple point of $CO_2$ to achieve these conditions. The supercritical fluid is passing through the reactor and contacting the spent adsorbent so that efficient extraction is possible, ensuring sufficient mass transfer between the fluid and solid phase at a sufficiently long time. The flow pattern ideally is selected according to the desired extraction level of the spent material, e.g., a counter flow operation may be chosen for high extraction levels within short extraction times. After the extraction fluid has been in contact with the spent material and optionally is loaded with an auxiliary solvent, the fluid is removed from the extraction reactor and a phase separation is initiated, preferably in a way that the $CO_2$, optional auxiliary solvent and extract generate different phases for easy separation. Typically, this is achieved by lowering the solubility of the extracted compounds by adoption of pressure and temperature.

Utilizing extraction with supercritical $CO_2$ optionally followed by subcritical water extraction avoids issues observed with prior art extraction methods such as the use of (and risks associated with) potentially hazardous and/or flammable organic solvents, the need for large extraction plant footprints and it enables the efficient reuse of the treated material.

In addition, further processing or post-treatment of regenerated bleaching earth is possible in the context of the present invention, including thermal treatment (cf., e.g., A. Merikhy, A. Heydari, H. Eskandari, F. Ghahraman-Rozegar, Chemical Engineering and Processing - Process Intensification, 158 (2020), 108167) or steam blowing (cf., e.g., L. S. Kheang, C. S. Foon, C. Y. May, M. A. Ngan, Am. J. Appl. Sci., 3 (10) (2006), 2063-2067)

Both, the extraction method and the post-treatment of the regenerated adsorbent, preferably reBE, material, if applied, affect the properties and characteristics of the material, in particular with respect to its particle size and shape, surface area, pore volume and impurity hindered accessibility to active sites (such as solid acidic sites). Often enough the goal of de-oiling is to reach surface areas and pore volumes close to the ones of the respective original adsorbent, preferably BE, material, while controlling the particle size distribution that secures impurity removal and processability under common refining conditions. This is often shown by comparing not only characterization, but also bleaching activity (e.g., color removal) in various edible oils.

The adsorbent suitable in the method of the present invention can be any type of adsorbent, preferably BE, obtained after spent adsorbent, preferably SBE, regeneration, with or without post-treatment. Preferably, the regeneration method uses a solvent and process conditions that do not fundamentally alter the original crystalline structure of the mineral that is the basis for the adsorbent, preferably the bleaching earth.

In case post-treatment is necessary, post-treatment using a minimum number of steps and consuming as little energy as possible, such as mild activation with chemicals such as mineral and organic acid, or calcination at lowest possible temperature, is preferred. Apart from the extraction according to the method of the invention no further post-treatment is desirable to avoid further chemicals and energy consumption.

Suitable types of adsorbents that can be regenerated with the method according to the invention include bleaching earths (BE) (all commercially available from Clariant), such as naturally activated bleaching earth (NABE, such as e.g. Tonsil@ Standard 575), dry modified acid-activated bleaching earths (DMBE, such as e.g. Tonsil@ Optimum 278FF), surface modified bleaching earths (SMBE, such as e.g. Tonsil@ Supreme 112FF), and high performance bleaching earths (HPBE, such as e.g. Tonsil@ Supreme 114FF), Tonsil@ 1206, Tonsil@ 1218, as well as mixtures of two or more of these types of BE. Such types of BE are generally known in the art and are commercially available, e.g. from Clariant Produkte (Deutsch-land) GmbH or other companies, in a wide variety of grades and for different applications.

The main difference between each type of the above-mentioned BE can be found in their bleaching activity and physical parameters. NABEs are produced only by physical processing and are pH neutral. DMBE are chemically modified with weak acids (such as citric acid). SMBE are chemically activated using strong acid (such as concentrated mineral acid, e.g., sulfuric acid or hydrochloric acid) to modify significantly their surface for higher activity. HPBE are completely activated earths chemically activated with a strong acid in a reactor to significantly modify mineral structure and obtain the highest activity.

The use of one type of BE or another, including its blend(s), is mainly defined by the type of feedstock to be refined and the desired specifications of the process.

A further influencing factor for the performance of the adsorbent after applying the method of the present invention is the history or prior use of the regenerated adsorbent, preferably reBE. Regenerated adsorbent, preferably reBE stemming from treatment of difficult-to-bleach feedstocks can contain more impurities (e.g., metals and color bodies) that might be difficult to remove and may reduce the uptake performance for metals.

A further object of the invention is the use of the adsorbent obtained by the method of the invention as adsorbent for different types of waste feedstock as described above. In particular, it can be used as an adsorbent in circular oil or renewable oil applications, especially in production of hydrotreated vegetable oils (HVO) and/or sustainable aviation fuels (SAF), and in in mineral oil treatment, plastics recycling or bioplastics production. The adsorbent obtained by the method of the invention can also be used as an adsorbent in edible oil applications or as a catalyst in pyrolysis or thermal-chemical treatments.

The adsorbent obtained by the method of the invention can also be used as a filter aid in different applications, including edible and renewable or circular oil refining.

EXAMPLES

The invention and its benefits will further be explained by the following experimental examples.

Spent BE samples were obtained from a single SBE (Tonsil Optimum 210FF, an HPBE) that has been used in a renewable fuel bleaching process and has been collected from the filter cake of such process. Residual oil from the filter cake was extracted using $scCO_2$ and/or sub-critical water, as the case may be. The residual solid material was dried and used as reBE.

The $scCO_2$ extraction of the SBE was carried out using a small-scale batch extractor with 1 l volume. The $CO_2$ was supplied from a dip tube cylinder, cooled down, compressed to the desired pressure using a pump and heated up to the required temperature before entering the batch reactor. Typical $CO_2$ flowrates for the experiments were between 0.5 and 1 kg/h. Sample sizes varied between 10 g and 300 g per extraction. After the extraction the loaded $CO_2$ steam has been overheated and the pressure lowered to initiate product/$CO_2$ separation. The material to be extracted was not dried prior to extraction and had a typical water content between 3 and 10 % (w/w). Water could be partially extracted at different conditions being present in the loaded $CO_2$ for extraction.

Subcritical water extraction was performed in Teflon lined high pressure autoclaves at temperatures between 100 and 180 °C. The generated steam pressure defined the extraction conditions. A stainless-steel autoclave with inert gas supply line was used to alter the pressure during the extraction if required.

Bleaching earth performance was determined by the capacity of removing phosphorous in a synthetic model waste feedstock which was a 1:1:1 (w/w) blend of soybean oil, used cooking oil and animal fat. The refining process involved pre-treatment, bleaching, and filtration.

In the pretreatment procedure, the feedstock was mixed with 0.15% (w/w) citric acid (30% (w/w) aqueous solution) for 10 min. After that 100 % (w/w) of water was added and the oil/water mixture was put into an ultrasound water bath at 80°C for 1 hour. After the ultrasound treatment oil and water were separated into a funnel. The oil was filtered with paper filter.

Then, bleaching step is done by adding 1.0 %(w/w) of adsorbent (bleaching earth or reBE) to the feedstock, heating up the feedstock/adsorbent mixture to 80-85°C and stirring under nitrogen atmosphere for 35 min. Once bleaching is finished, for separating the waste bleaching earth from the oil, the oil/adsorbent suspension is filtered using a folded cellulose filter (GE Whatman 598/1).

In the case of only bleached oil (used cooking oil and animal fat), the bleached oil is collected to evaluate oil characteristics based on impurity content.

The following analytical methods have been used:

Metals and other contaminants like phosphorus (P) in the bleached oil are determined by calibrated Inductively Coupled Plasma (ICP) with optical emission spectroscopy (OES) detection. Samples are prepared by blending the oil with kerosene. Then, the samples are injected in the ICP for concentration measurement that together with concentration ratio used in calibration and weight of the sample, final results are obtained.

Residual oil content was determined using the following loss of ignition method: 1 g of a dried adsorbent sample was weighed into an annealed, weighed porcelain crucible with cover up and annealed for 2 hours at 1000 °C in a muffle furnace. Then the crucible is cooled down in the desiccator and weighed. The loss of ignition (corresponding to the residual oil content) is calculated as follows:

$$(G \times 100)/E = \% \text{ loss on ignition}$$

G = loss on ignition in g = (mass crucible + mass sample) – mass crucible after 2 hours of annealing

E = weighted sample in g = (mass crucible + mass sample) – mass crucible empty

Residual oil content / % = loss of ignition of spent adsorbent – loss of ignition of fresh adsorbent

For the interpretation of the results regarding residual phosphorous removal activity the following calculation was used:

$$real\ dosage\ (\%) = \frac{adsorbent\ amount\ -\ adsorbent\ amount\ x\ oil\ content_{spent\ adsorbent}\ (\%)\ -\ adsorbent\ amount\ x\ filter\ aid\ content_{spent\ adsorbent}\ (\%)}{oil\ amount\ for\ bleaching}\ x100$$

$$P\ removal(\%) = \frac{P\ content_{raw\ oil}\ (ppm)\ -\ P\ content_{bleached\ oil}\ (ppm}{P\ content_{raw\ oil}\ (ppm}\ x100$$

$$P\ removal\ norm.(\%) = \frac{P\ Removal_{bleached\ oil}\ (\%)}{real\ dosgae\ _{bleaching}\ (\%)}\ x100\ x\ 1\ \%$$

$$Remain\ activity\ for\ P\ removal\ (\%) = \frac{P\ Removal\ norm._{reg.adsorbent}\ (\%)}{P\ removal\ norm._{fresh\ adsorbent}\ (\%)}\ x100$$

As can be seen from the results in Table 1 and Table 2 (below), the method of the present invention allows the regeneration of spent adsorbent materials, in particular spent bleaching earth, from waste feedstock refining, exhibiting a high P removal activity from such waste feedstock if either $scCO_2$ or subcritical water regeneration has been used, and a P removal activity from such waste feedstock similar to the original, fresh adsorbent example (Virgin Tonsil Optimum 210FF) if both $scCO_2$ and subcritical water regeneration has been used.

| Table 1 | P / ppm | P removal activity related to 1% dosage (normalized) | remain activity related to optimum activity (=Virgin Tonsil Optimum 210FF) | real dosage (oil free and filter aid free) |
|---|---|---|---|---|
| de-gummed feedstock | 43 | | | |
| Virgin Tonsil Optimum 210FF | 13 | 60.6% | 100% | 1.00% |
| $scCO_2$-regenerated Tonsil Optimum 210FF | 17 | 51.0% | 84% | 0.95% |
| Sub-critical water regenerated Tonsil Optimum 210FF | 19 | 46.1% | 76% | 0.92% |
| $scCO_2$ plus sub-critical water regenerated Tonsil Optimum 210FF | 15 | 59.9% | 99% | 0.91% |

As can be seen from Table 2, the metal and other contaminant content of the extracted feedstock (oil) from spent BE (SBEO = spent bleaching earth oil) showed very low values when the SBE was regenerated with $scCO_2$, while the values for the SBE regenerated with sub-critical water were comparable to values expected for waste feedstocks like UCO. The oil recovered from the spent adsorbent by the method of the invention therefore can be the basis for further use.

| Table 2 | scCO2-SBEO | sub-c. water SBEO |
|---|---|---|
| Al / ppm | 0 | 37 |
| Ca / ppm | 0.1 | 37 |
| Fe / ppm | 0.2 | 44 |
| Mg / ppm | 0.1 | 17 |
| P / ppm | 0 | 6.2 |
| Si / ppm | 1.1 | 80 |

As can be seen from the results presented in Table 3, sub-critical water extraction allows excellent oil removal from SBE in comparably short time (2 hours or less) at elevated temperatures and pressures (150-200 °C, 5-15 bar) and is suitable for batch processes. Oil extraction using scCO$_2$ works very effective already at temperatures as low as 60 °C but requires higher pressures and longer extraction times.

| Table 3 | Residual oil content (% (w/w)) |
|---|---|
| Spent Tonsil Optimum 210FF (comparative adsorbent) | 32 |
| Sub-critical water regenerated Tonsil Optimum 210FF (150 °C/60 min/5-15 bar) | 7 |
| Sub-critical water regenerated Tonsil Optimum 210FF (150 °C/120 min/5-15 bar) | 6 |
| Sub-critical water regenerated Tonsil Optimum 210FF (200 °C/60 min/5-15 bar) | 4 |
| Sub-critical water regenerated Tonsil Optimum 210FF (200 °C/120 min/5-15 bar) | 4 |
| scCO$_2$-regenerated Tonsil Optimum 210FF (100 °C/300 min/500 bar) | 3 |
| scCO$_2$-regenerated Tonsil Optimum 210FF (100 °C/300 min/300 bar) | 4 |
| scCO$_2$-regenerated Tonsil Optimum 210FF (60 °C/300 min/500 bar) | 1 |
| scCO$_2$-regenerated Tonsil Optimum 210FF (60 °C/300 min/300 bar) | 2 |

**Claims**

1. Method for regenerating spent adsorbent, in particular spent bleaching earth (SBE) comprising:

   a. providing the spent adsorbent from the treatment of a waste feedstock;
   b. extracting residual feedstock from the spent adsorbent with supercritical carbon dioxide (scCO$_2$) and/or sub-critical water (sub-cH$_2$O), thereby removing impurities from the spent adsorbent to obtain a regenerated adsorbent; and
   c. separating the regenerated adsorbent from the scCO$_2$ and/or sub-cH$_2$O.

2. Method according to claim 1, **characterized in that** the regenerated adsorbent has a phosphorous removal activity of at least 60 % compared to the phosphorous removal activity of the virgin adsorbent.

3. Method according to claim 1 or 2, **characterized in that** the regenerated adsorbent has a residual oil content of 15 % (w/w) or less.

4. Method according to any one of claims 1 to 3, further comprising recovering the waste feedstock.

5. Use of the regenerated adsorbent obtainable by the method of any one of claims 1 - 3 as adsorbent in circular oil or renewable oil applications.

6. Use according to claim 4, **characterized in that** the renewable oil application is production of hydrotreated vegetable oils (HVO) and/or sustainable aviation fuels (SAF).

7. Use of the regenerated adsorbent obtainable by the method of any one of claims 1 - 3 in mineral oil treatment, plastic recycling or bioplastic production.

| | | Europäisches Patentamt<br>European Patent Office<br>Office européen des brevets | **EUROPEAN SEARCH REPORT** | **Application Number**<br>**EP 22 38 2951** |
|---|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X,D | WALDMANN C ET AL: "DE-OILING CONTAMINATED BLEACHING CLAY BY HIGH-PRESSURE EXTRACTION",<br>JOURNAL OF THE AMERICAN OIL CHEMISTS SOCIETY, SPRINGER, DE,<br>vol. 68, no. 12,<br>1 December 1991 (1991-12-01), pages 922-930, XP000244116,<br>ISSN: 0003-021X, DOI: 10.1007/BF02657536<br>* abstract *<br>* Experimental program;<br>page 923 *<br>* tables 1,3 *<br>* page 929 – page 930 *<br>----- | 1-7 | INV.<br>B01J20/12<br>B01J20/34<br>B01D11/02<br>C11B13/04 |
| X,D | Oladosu W.A. ET AL: "Recovery of Vegetable Oil from Spent Bleaching Earth: State-of-the-Art and Prospect for Process Intensification",<br>Chemical Engineering Transactions,<br>1 March 2017 (2017-03-01), pages 133-138, XP093032797,<br>DOI: 10.3303/CET1756023<br>Retrieved from the Internet:<br>URL:https://www.aidic.it/cet/17/56/023.pdf<br>[retrieved on 2023-03-19]<br>* 2.3. Subcritical Water Technology;<br>page 134 *<br>* 2.4. Supercritical Fluid Extraction (SFE);<br>page 135 – page 136 *<br>----- | 1-5 | |
| | –/-- | | **TECHNICAL FIELDS SEARCHED (IPC)**<br>B01J<br>B01D<br>C11C<br>C11B |

The present search report has been drawn up for all claims

| Place of search | Date of completion of the search | Examiner |
|---|---|---|
| The Hague | 28 March 2023 | Kaluza, Nicoleta |

Europäisches
Patentamt

European
Patent Office

Office européen
des brevets

## EUROPEAN SEARCH REPORT

Application Number

EP 22 38 2951

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SUBRA-PATERNAULT P ET AL: "Utilization of pressurized CO2, pressurized ethanol and CO2-expanded ethanol mixtures for de-oiling spent bleaching earths", THE JOURNAL OF SUPERCRITICAL FLUIDS, vol. 149, 25 March 2019 (2019-03-25), pages 42-53, XP085673722, ISSN: 0896-8446, DOI: 10.1016/J.SUPFLU.2019.03.016 * abstract * * 1. Introduction; page 43, left-hand column * * 2.1. Materials; page 43, right-hand column * * 2.3.Extraction of SBE by scCO2; page 44 * * table 2 * | 1-7 | |
| X | US 2003/029815 A1 (NAKAOKA SATOSHI [JP] ET AL) 13 February 2003 (2003-02-13) * claims 1,2,4,6,8,9 * * paragraphs [0030], [4953] * | 1-7 | |
| A | DE 43 30 274 A1 (SUED CHEMIE AG [DE]) 9 March 1995 (1995-03-09) * claims 1-9 * | 1-7 | |

TECHNICAL FIELDS
SEARCHED (IPC)

The present search report has been drawn up for all claims

| Place of search | Date of completion of the search | Examiner |
|---|---|---|
| The Hague | 28 March 2023 | Kaluza, Nicoleta |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 38 2951

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2023

| Patent document cited in search report | | Publication date | Patent family member(s) | | | Publication date |
|---|---|---|---|---|---|---|
| US 2003029815 | A1 | 13-02-2003 | JP | 2002263403 | A | 17-09-2002 |
| | | | US | 2003029815 | A1 | 13-02-2003 |
| DE 4330274 | A1 | 09-03-1995 | DE | 4330274 | A1 | 09-03-1995 |
| | | | EP | 0673281 | A1 | 27-09-1995 |
| | | | WO | 9507137 | A1 | 16-03-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6780321 B2
- KR 102350370 B1

### Non-patent literature cited in the description

- **A. BOUKERROUI ; M. OUALI.** *Chemical Technology and Biotechnology,* 2000, vol. 75 (9), 773-776
- **R. A. FATTAH ; N. A. MOSTAFA ; M. S. MAHMOUD ; W. ABDELMOEZ.** *Proceeding of the 7th ICEE Conference,* 2014, 27-29
- **W. A. OLADOSUA ; Z. A. MANAN ; S. R. W. ALWI.** *Chemical Engineering Transactions,* 2017, vol. 56, 133-138
- **J. NASER ; O. P. AVBENAKE ; F. N. DABAI ; B. Y. JIBRIL.** *Waste Management,* 2021, vol. 126, 258-265
- **WALDMANN ; EGGERS.** *JAOCS,* 1991, vol. 68, 922-930
- **KING et al.** *J. Supercrit. Fluids,* 1992, vol. 5, 38-41
- **KHEANG et al.** *Am. J. Appl. Sci.,* 2006, vol. 3, 2063-2067
- **R. FATTAH et al.** *Adv. Biosci. Biotechnol.,* 2014, vol. 5, 261-272
- **P. SUBRA-PATERNAULT et al.** *J. Supercritical Fluids,* 2019, vol. 149, 42-53
- **LOW et al.** *Cleaner Energy and Technology,* 2022, vol. 7, 100418
- **A. MERIKHY ; A. HEYDARI ; H. ESKANDARI ; F. GHAHRAMAN-ROZEGAR.** *Chemical Engineering and Processing - Process Intensification,* 2020, vol. 158, 108167
- **L. S. KHEANG ; C. S. FOON ; C. Y. MAY ; M. A. NGAN.** *Am. J. Appl. Sci.,* 2006, vol. 3 (10), 2063-2067